# EUROPEAN PATENT APPLICATION

(11) **EP 4 818 507 A1**
(43) Date of publication of application: **07.10.2026**
(21) Application number: 26155445.5
(22) Date of filing: 30.01.2026
(51) Int. Cl.: F02K 1/82, F02C 7/045

(54) **ACOUSTIC TREATMENT PROXIMATE A FAN STAGE**

(30) Priority: 03.04.2025 US 202519169380
(71) Applicant: RTX Corporation, Farmington, CT 06032 (US)
(72) Inventor: Topol, David A., Bloomfield, 06002-3167 (US); Morin, Bruce L., Longmeadow, 01106 (US)
(74) Representative: Schmitt-Nilson Schraud Waibel Wohlfrom Patentanwälte Partnerschaft mbB

(57) **Abstract**

An acoustic treatment proximate a fan stage (12) including the acoustic treatment (42) disposed in at least one location along surfaces exposed to a fan discharge airflow downstream from a fan within the fan stage (12).

## Description

The present disclosure is directed to the improved acoustic treatment proximate the fan stage.

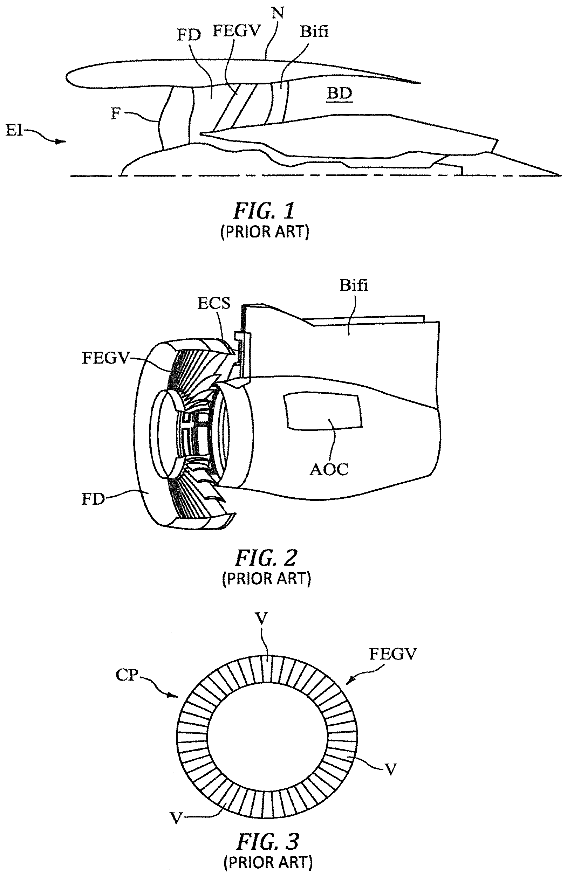

Current gas turbine engine design, as seen in Fig. 1 through Fig. 4a, includes a design with variable or non-variable fan exit guide vanes (FEGV). The fan F is positioned within the fan duct FD proximate the engine inlet EI. The fan exit guide vanes (FEGV) are downstream from the fan F and located forward of the bypass duct BD.

A current FEGV pattern is created to minimize airflow back pressure adverse effect on fan blades F caused by the downstream presence of nacelle N bypass duct BD elements (Fig. 2), such as the upper and lower bifurcation BiFi, air-to-oil cooler (AOC), and environmental control system inlet ECS.

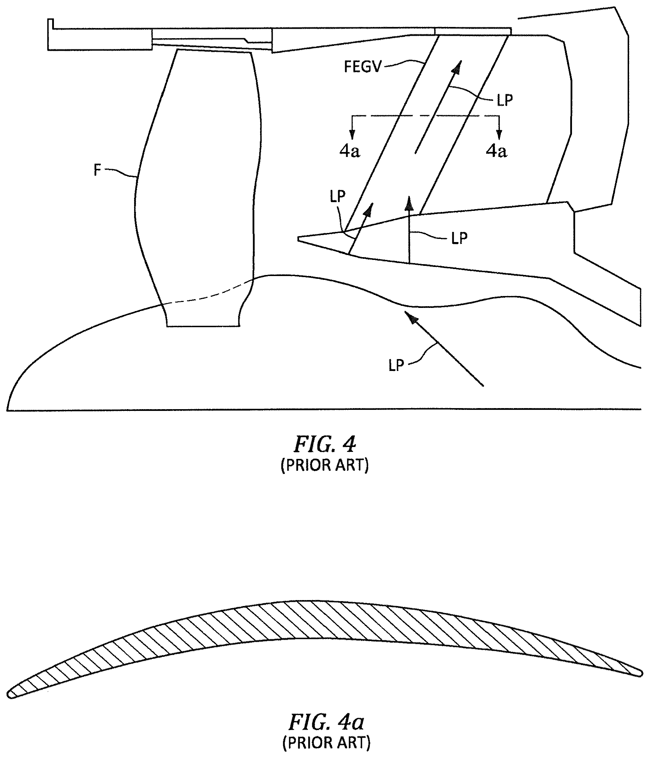

As seen in Fig. 3, the FEGV has a circumferential pattern CP made up of vanes V that can translate the structural load path LP shown as arrows in Fig. 4. All vane types are designed with the same cross sectional monolithic load carrying features (Fig. 4a). Some vanes vary from vane to vane to allow the vanes to direct the airflow around the upper and lower bifurcation. Additionally, the FEGV pattern aims to optimize the fan duct performance and acoustic characteristics of the gas turbine engine.

The FEGV pattern is defined to meet structural, performance and acoustic requirements across a wide range of operating conditions. It is therefore not optimized at any single mission condition, like cruise condition or climb condition. Engine noise targets are getting more challenging for future programs. Engine and airframe makers are looking for more opportunities for noise reduction. At the engine side, acoustic treatable areas are limited. Areas proximate the fan exit guide vanes are areas for noise reduction opportunities.

In accordance with the present disclosure, there is provided an acoustic treatment proximate a fan stage comprising the acoustic treatment disposed in at least one location along surfaces exposed to a fan discharge airflow downstream from a fan within the fan stage.

Particular embodiments further may include at least one, or a plurality of, the following optional features, alone or in combination with each other:

A further embodiment of any of the foregoing embodiments may additionally and/or alternatively include the at least one location comprises at least one of the surfaces of a fan exit guide vane, a radially inner surface, a radially outer surface, an intra-stage panel, an outside diameter platform, an inside diameter platform, an aft inner panel, and a liner located within the at least one location.

A further embodiment of any of the foregoing embodiments may additionally and/or alternatively include the acoustic treatment is configured to target particular frequencies associated with tone and/or broadband noise.

A further embodiment of any of the foregoing embodiments may additionally and/or alternatively include the acoustic treatment proximate an intra-stage panel is targeted for tones.

A further embodiment of any of the foregoing embodiments may additionally and/or alternatively include the acoustic treatment proximate an outside diameter platform and an inside diameter platform is targeted for both tones and broadband noise.

A further embodiment of any of the foregoing embodiments may additionally and/or alternatively include the acoustic treatment is configured integral with a material of the surfaces.

A further embodiment of any of the foregoing embodiments may additionally and/or alternatively include the acoustic treatment proximate an aft inner panel is targeted for broadband noise.

In accordance with the present disclosure, there is provided a gas turbine engine with acoustic treatment proximate the fan stage comprising a fan located within a fan duct; and an array of fan exit guide vanes supported within the fan duct downstream from the fan, the array of fan exit guide vanes span across the fan duct attached to a radially inner surface of the fan duct and a radially outer surface of the fan duct; and the acoustic treatment disposed in at least one location along surfaces exposed to a fan discharge airflow proximate the array.

Particular embodiments further may include at least one, or a plurality of, the following optional features, alone or in combination with each other:
A further embodiment of any of the foregoing embodiments may additionally and/or alternatively include the at least one location comprises at least one of the surfaces of the fan exit guide vanes, a radially inner surface, a radially outer surface, an intra-stage panel, an outside diameter platform, an inside diameter platform, an aft inner panel, and a liner located within the at least one location.

A further embodiment of any of the foregoing embodiments may additionally and/or alternatively include the gas turbine engine with acoustic treatment proximate the fan stage further comprising a face sheet parameter including a percent open area of a face sheet disposed over the acoustic treatment, a hole diameter and a perforated plate thickness and a cavity parameter including a cavity depth within the acoustic treatment, wherein the face sheet parameter and the cavity parameter are configured to maximize attenuation.

A further embodiment of any of the foregoing embodiments may additionally and/or alternatively include the acoustic treatment is configured to target predetermined frequencies associated with tone and/or broadband noise.

A further embodiment of any of the foregoing embodiments may additionally and/or alternatively include the acoustic treatment proximate an intra-stage panel is targeted for tones; the acoustic treatment proximate an aft inner panel is targeted for broadband noise; wherein the acoustic treatment proximate an outside diameter platform and an inside diameter platform is targeted for both tones and broadband noise.

A further embodiment of any of the foregoing embodiments may additionally and/or alternatively include at least one acoustic zone formed downstream of the fan configured for acoustic dampening features manufactured directly into a parent material along the surfaces; wherein a location and a shape of the at least one acoustic zone is responsive to the design of the fan stage, acoustic and attachment structural requirements.

In accordance with the present disclosure, there is provided a process for creating acoustic treatment proximate a fan stage comprising disposing the acoustic treatment in at least one location along surfaces exposed to a fan discharge airflow downstream from a fan extending down to the nacelle attachment location.

Particular embodiments further may include at least one, or a plurality of, the following optional features, alone or in combination with each other:
A further embodiment of any of the foregoing embodiments may additionally and/or alternatively include the process further comprising locating the at least one location within at least one of surfaces of a fan exit guide vane, a radially inner surface, a radially outer surface, an intra-stage panel, an outside diameter platform, an inside diameter platform, an aft inner panel, and a liner located within the at least one location.

A further embodiment of any of the foregoing embodiments may additionally and/or alternatively include the process further comprising forming the acoustic treatment to target particular frequencies associated with tone and/or broadband noise.

A further embodiment of any of the foregoing embodiments may additionally and/or alternatively include the process further comprising forming the acoustic treatment proximate an intra-stage panel is targeted for tones.

A further embodiment of any of the foregoing embodiments may additionally and/or alternatively include the process further comprising forming the acoustic treatment proximate an outside diameter platform and an inside diameter platform is targeted for both tones and broadband noise.

A further embodiment of any of the foregoing embodiments may additionally and/or alternatively include the process further comprising forming the acoustic treatment proximate an aft inner panel is targeted for broadband noise.

A further embodiment of any of the foregoing embodiments may additionally and/or alternatively include the process further comprising forming the acoustic treatment is configured integral with a material of the surfaces.

Other details of the acoustic treatment proximate the fan stage are set forth in the following detailed description and the accompanying drawings wherein like reference numerals depict like elements.
Fig. 1 is a schematic representation of a prior art gas turbine engine.
Fig. 2 is a schematic representation of a prior art gas turbine engine.
Fig. 3 is a schematic representation of a prior art fan exit guide vane pattern.
Fig. 4 is a schematic representation of a prior art fan exit guide vane with load path.
Fig. 4A is a sectional view schematic representation of the prior art fan exit guide vane Fig. 4.
Fig. 5 is a schematic representation of an exemplary fan exit guide vane with acoustic treatment.
Fig. 5a is a sectional view of schematic representation of the exemplary fan exit guide vane with acoustic treatment.
Fig. 6 is a schematic representation of an exemplary fan stage with acoustic treatment.

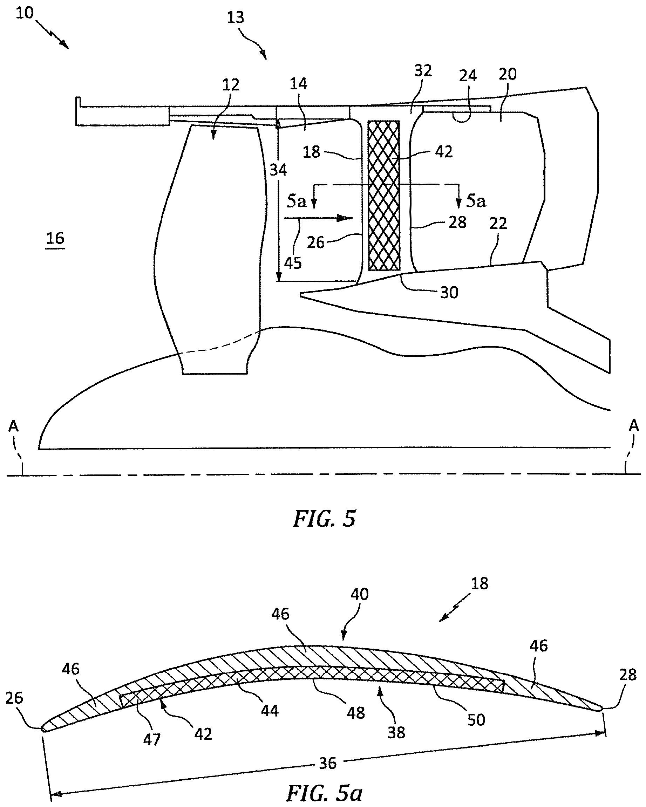

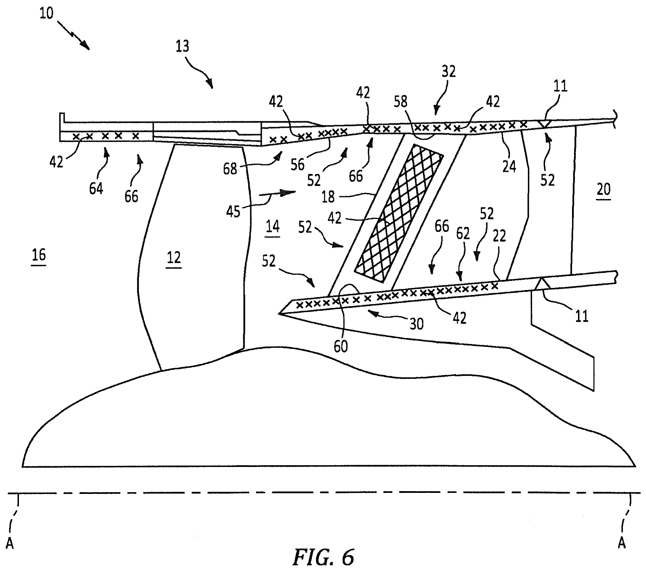

Referring now to Fig. 5 and Fig. 6 showing a schematic of a gas turbine engine 10. The gas turbine engine 10 includes a fan 12 with fan blades within a fan duct 14 proximate an engine inlet 16. Downstream from the fan 12 is a fan section or fan stage 13 with fan exit guide vane 18 upstream from a nacelle attachment location 11 near the bypass duct 20 as seen in Fig. 6.

The fan exit guide vane 18 spans across the fan duct 14 attached to a radially inner surface 22 of the fan duct 14 and a radially outer surface 24 of the fan duct 14.

With reference also to Fig. 5a, the fan exit guide vane 18 includes a leading edge 26 and a trailing edge 28 opposite chordwise from the leading edge 26.

The fan exit guide vane 18 includes a radially inner attachment region 30 proximate the radially inner surface 22. The fan exit guide vane 18 includes a radially outer attachment region 32 proximate the radially outer surface 24. The radially inner attachment region 30 is opposite spanwise from the radially outer attachment region 32. The radially inner attachment region 30 of the fan exit guide vane 18 attaches to the fan duct 14 at the radially inner surface 22. The radially outer attachment region 32 of the fan exit guide vane 18 attaches to the fan duct 14 at the radially outer surface 24. The fan exit guide vane 18 includes a pressure side 38 opposite a suction side 40.

The fan exit guide vane 18 includes a span 34 dimension extending between the radially inner attachment region 30 and the radially outer attachment region 32. The fan exit guide vane 18 includes a chord dimension 36 extending between the leading edge 26 and the trailing edge 28, as seen in Fig 5a. The fan exit guide vane 18 includes a pressure side 38 opposite a suction side 40.

The fan exit guide vane 18 shown in Fig 5 is oriented generally vertical, that is along a similar radial span between the radially inner surface 22 and radially outer surface 24 relative to the axis A. Alternatively, the fan exit guide vane 18 can include a canted orientation as seen in Fig. 6. In an exemplary embodiment, the vane stacking axis can be canted aft, that is the radially inner attachment region 30 is forward of the radially outer attachment region 32. The fan exit guide vane 18 can include a canted orientation that is circumferential (in a circumferential direction).

The fan exit guide vane 18 can include an acoustic treatment 42. The acoustic treatment 42 can be any material or structure configured to dissipate sound energy. The acoustic treatment 42 can include various materials and/or structures with sound-absorbing and diffusing properties. In an exemplary embodiment the acoustic treatment 42 can provide a broadband noise benefit from about 0.5 to 5 EPNdB. The acoustic treatment 42 can be varied from one fan exit guide vane 18 to another. The variation can be by varying the materials, the shape and the location of the acoustic treatment 42, as further described as follows. The materials of the acoustic treatment 42 can include, but are not limited to composites, metals, plastics, foams, and the like. The acoustic treatment is porous and/or shaped in a form that includes a plurality of cavities with a surface area to fill ratio (e.g., many nooks and crannies) to enable the acoustic energy to enter and dissipate within. That is, the acoustic panel can be shaped to influence the acoustic dampening capability thereof. For example, the material may include a honeycomb structure, which enables significant acoustic dampening.

The acoustic treatment 42 can be formed integral with the fan exit guide vane 18. In an exemplary embodiment, there can be between 20 to 70 fan exit guide vanes 18 with acoustic treatment 42 in a fan exit guide vane array. The acoustic treatment 42 can be formed within an acoustic zone(s) 44 adjacent a structural region 46 as seen in cross section at Fig. 5a. The acoustic zone 44 can have a rectangular cross section and/or shape, oval cross section and/or shape, tee shape and/or cross section and the like (e.g., different shapes and/or cross sections, combinations of shapes and/or cross sections, etc.). The acoustic zone 44 can be formed in the fan exit guide vane 18 at predetermined locations along the span 34 of the fan exit guide vane 18 as seen in Fig. 5. The acoustic zone 44 can be aligned along the span 34. The acoustic zone 44 can be aligned chordwise.

The acoustic zone 44 can be configured to be constructed integrally utilizing additive manufacturing techniques, when creating the fan exit guide vane 18. The acoustic zone(s) 44 can allow for acoustic dampening features manufactured directly into the parent material along with the structural region(s) 46 of the fan exit guide vane 18. The location(s) and shape(s) of the acoustic zone 44 can be dependent on the design of the fan exit guide vane 18 final count/aero design, acoustic and attachment structural requirements. The acoustic zone 44 can be varied and shaped to influence the acoustic capability in proximity of the fan exit guide vane 18. The acoustic treatment 42 can be formed at a partial depth from the exterior 48 of the fan exit guide vane 18. The structure orientation, size, shape and density of the acoustic attenuation oriented acoustic treatment 42 can be varied and optimized to balance the structure requirements, durability/life requirements and acoustic benefits of the fan exit guide vane 18. The acoustic treatment 42 can bemulti-degree-of-freedom acoustic treatment with cavities and perforated sheets of material as needed. Perforations can be elongated beyond the sheet surfaces creating small tubes. The acoustic treatment 42 can be an open treatment where the resistance comes mainly from the face sheet and any septum sheets, and the reactance comes mainly from the volume of air in the treatment cavity. The acoustic treatment 42 can be sponge-like. In an exemplary embodiment, the acoustic treatment 42 can have an effective density of 25% or less relative to the remainder of the material forming the fan exit guide vane 18. Effective density can include the air in any hollow regions/pockets that are inherent due to the porous structure. The acoustic treatment 42 can be integrated on either the pressure side 38 or suction side 40.

A face sheet or surface skin 50 as seen in Fig. 5a can be in operative communication with the acoustic zone 44 and the acoustic treatment 42. The surface skin 50 can be applied over acoustic zone 44 configured for aerodynamic benefit to the fan exit guide vane 18. The surface skin 50 can allow the sound energy to pass through and penetrate the acoustic treatment 42 into cavities 47. The cavities 47 can exist on more the just the vanes 18. The cavities 47 can exist with all acoustic treatments 42. The surface skin 50 can be additively manufactured in the same operation as the rest of the fan exit guide vane 18 and acoustic treatment 42.

Referring also to Fig. 6, showing a schematic of a gas turbine engine 10. The acoustic treatment 42 is shown in locations along surfaces 52 exposed to fan discharge airflow 45 along the fan duct 14. Examples of the surfaces 52 can include, but are not limited to, the fan exit guide vane 18, the radially inner surface 22, the radially outer surface 24, intra-stage panels 56, outside diameter platform 58, inside diameter platform 60, aft inner panels 62, as well as forward fan case panels 64 and any liners 66 that are located within these areas.

The acoustic treatment 42 can be configured to target particular frequencies associated with tone and/or broadband noise. The acoustic treatment 42 mechanical design can be determined to maximize noise attenuation at a range of frequencies. In the example of a standard single degree of freedom liner 66 a face sheet parameter like the percent open area (POA) of the face sheet 50, hole diameter and perforated plate thickness can be varied and cavity parameters like the cavity 47 depth can be varied to maximize attenuation. Other types of acoustic treatment 42 modify such things as face sheet 50 hole shape and size, hole location and cavity 47 geometry. These parameters can be varied to maximize noise reduction. The acoustic treatment 42 at a particular location can target tones, then the face sheet 50 and cavity 47 geometries are modified to target the tone frequency or frequencies requiring noise reduction. When acoustic treatment 42 at a particular location is targeting broadband, then the face sheet 50 and cavity 47 geometries are modified to target as wide a band of frequencies as possible. This might be performed with a single degree of freedom liner 66 with acoustic treatment 42 or a multi-degree of freedom liner 68 acoustic treatment 42. When targeting both broadband and tones, an even wider band of frequencies might be required. This might be possible with the single degree of freedom liner 66 acoustic treatment 42 but is more likely possible using multi-degree of freedom liner 68. A multi-degree of freedom liner 68 can have some combination of cavity 47 sizes and shapes along with different face sheet 50 geometries to obtain the required acoustic tuning.

The acoustic treatment 42 can be configured for impedance targeting single frequency tones generated by a wake with flow varying in time over fan exit guide vanes 18 or other structures, for example steady fan wake velocity distributions interacting with the fan exit guide vane 18 or other structures and/or broadband noise of multiple frequencies generated by vortices and turbulence of the wake interacting with the fan exit guide vane 18 or other structures.

For example, the acoustic treatment 42 proximate the intra-stage panel 56 can be targeted for tones. The acoustic treatment 42 proximate the platforms 58, 60 can be targeted for both tones and broadband noise. The acoustic treatment 42 proximate the aft inner panel 62 can be targeted for broadband noise.

A technical advantage of the disclosed acoustic treatment proximate the fan stage includes a capacity to dampen acoustic noise propagating in the fan duct or to modify the noise source in order to reduce noise.

Another technical advantage of the disclosed acoustic treatment proximate the fan stage includes structural regions formed proximate the fan stage configured to accommodate acoustic zones.

Another technical advantage of the disclosed acoustic treatment proximate the fan stage includes integrated structural regions with acoustic treatment.

Another technical advantage of the disclosed acoustic treatment proximate the fan stage includes a pattern of acoustic treatment integrated within the surfaces exposed to the fan discharge airflow enabling both aero and structural function.

There has been provided an acoustic treatment proximate the fan stage. While the acoustic treatment proximate the fan stage has been described in the context of specific embodiments thereof, other unforeseen alternatives, modifications, and variations may become apparent to those skilled in the art having read the foregoing description. Accordingly, it is intended to embrace those alternatives, modifications, and variations which fall within the broad scope of the appended claims.

## Claims

1. An acoustic treatment proximate a fan stage comprising:
the acoustic treatment disposed in at least one location along surfaces exposed to a fan discharge airflow downstream from a fan within the fan stage.

2. The acoustic treatment proximate the fan stage according to claim 1, wherein the at least one location comprises at least one of the surfaces of a fan exit guide vane, a radially inner surface, a radially outer surface, an intra-stage panel, an outside diameter platform, an inside diameter platform, an aft inner panel, and a liner located within the at least one location.

3. The acoustic treatment proximate the fan stage according to claim 1 or 2, wherein the acoustic treatment is configured to target particular frequencies associated with tone and/or broadband noise.

4. The acoustic treatment proximate the fan stage according to any of claims 1 to 3, wherein the acoustic treatment proximate an intra-stage panel is targeted for tones.

5. The acoustic treatment proximate the fan stage according to any of claims 1 to 4, wherein the acoustic treatment proximate an outside diameter platform and an inside diameter platform is targeted for both tones and broadband noise.

6. The acoustic treatment proximate the fan stage according to any of claims 1 to 5, wherein the acoustic treatment is configured integral with a material of the surfaces.

7. The acoustic treatment proximate the fan stage according to any of claims 1 to 6, wherein the acoustic treatment proximate an aft inner panel is targeted for broadband noise.

8. A gas turbine engine with the acoustic treatment proximate the fan stage according to any of claims 1 to 7, the gas turbine engine comprising:
a fan located within a fan duct; and
an array of fan exit guide vanes supported within the fan duct downstream from the fan, the array of fan exit guide vanes span across the fan duct attached to a radially inner surface of the fan duct and a radially outer surface of the fan duct; and
the acoustic treatment disposed in at least one location along surfaces exposed to a fan discharge airflow proximate the array.

9. The gas turbine engine with acoustic treatment proximate the fan stage according to claim 8, further comprising:
a face sheet parameter including a percent open area of a face sheet disposed over the acoustic treatment, a hole diameter and a perforated plate thickness and a cavity parameter including a cavity depth within the acoustic treatment, wherein the face sheet parameter and the cavity parameter are configured to maximize attenuation.

10. The gas turbine engine with acoustic treatment proximate the fan stage according to claim 8 or 9, wherein at least one acoustic zone formed downstream of the fan configured for acoustic dampening features manufactured directly into a parent material along the surfaces; wherein a location and a shape of the at least one acoustic zone is responsive to the design of the fan stage, acoustic and attachment structural requirements.

11. A process for creating acoustic treatment proximate a fan stage comprising:
disposing the acoustic treatment in at least one location along surfaces exposed to a fan discharge airflow downstream from a fan extending down to the nacelle attachment location.

12. The process according to claim 11, further comprising:
locating the at least one location within at least one of surfaces of a fan exit guide vane, a radially inner surface, a radially outer surface, an intra-stage panel, an outside diameter platform, an inside diameter platform, an aft inner panel, and a liner located within the at least one location.

13. The process according to claim 11 or 12, further comprising:
forming the acoustic treatment to target particular frequencies associated with tone and/or broadband noise.

14. The process according to any of any of claims 11 to 13,
further comprising:
forming the acoustic treatment proximate an intra-stage panel is targeted for tones; and/or
further comprising:
forming the acoustic treatment proximate an outside diameter platform and an inside diameter platform is targeted for both tones and broadband noise; and/or
further comprising:
forming the acoustic treatment proximate an aft inner panel is targeted for broadband noise.

15. The process according to any of claims 11 to 14, further comprising:
forming the acoustic treatment is configured integral with a material of the surfaces.
